# DEMANDE DE BREVET EUROPEEN

(11) **EP 2 248 571 A1**
(43) Date de publication de la demande: **10.11.2010**
(21) Numéro de dépôt: 09159447.3
(22) Date de dépôt: 05.05.2009
(51) Int. Cl.: B01D 25/164, B01D 25/28

(54) **Filtres-presse à membranes et procédé de filtration**

(71) Demandeur: Meura S.A., 7600 Péruwelz (BE)
(72) Inventeur: Harmegnies, Frédérique, 7600, Péruwelz (BE); De Brackeleire, Christian, 7600, Péruwelz (BE)
(74) Mandataire: Vandeberg, Marie-Paule L.G.

(57) **Abrégé**

Un filtre-presse à plateaux du type « à pression à membrane » est décrit ainsi qu'un procédé pour améliorer le lavage des gâteaux de filtration, en particulier pour la filtration de maische de brasserie ou de distillerie.

La présente invention permet d'améliorer le lavage du gâteau de filtration en gérant de manière précise l'étape intermédiaire du début de lavage / fin de compression des membranes, en récupérant et utilisant le fluide de compression comme partie du fluide de lavage.

Le procédé et le filtre décrits ne nécessitent pas de réservoir spécial pour le fluide de compression, ni de circuit de boucle avec échangeur pour la gestion du fluide de compression. Le fluide de compression peut être de l'eau chaude, celle-ci est renouvelée à chaque étape de compression. Le fluide de compression est identique à l'eau utilisée pour le lavage (température, pH). Le système est simple, efficace et ne présente pas de risque lié à une contamination, ni pour le produit à filtrer, ni pour les membranes élastomères.

## Description

L'invention se rapporte aux filtres-presse, et en particulier concerne les filtres dit « à pression à membranes » pour la filtration d'une maische de brasserie ou de distillerie dont résulte un gâteau compressible formé de moût et de drêches. L'invention se rapporte également à un procédé de filtration améliorant le lavage du gâteau de filtration.

Pour la filtration d'une maische de brasserie ou de distillerie, il existe des filtres-presse du type à plateaux, tel que décrit par exemple dans US 3,926,811. Ce type de filtres-presse présente une pluralité de plateaux assemblés les uns aux autres par leur cadre périphérique. Un milieu filtrant, généralement une toile souple, est tendu sur chaque plateau de manière à délimiter, de part et d'autre du milieu filtrant : une chambre de filtration dans laquelle est introduite la maische à filtrer, et une chambre de récolte du filtrat. Au fur et à mesure de la filtration, un gâteau de filtration se forme sur le milieu filtrant.

Les filtres-presse dit « à pression à membrane » se caractérisent par la présence d'une membrane élastique formant une paroi frontale délimitant une chambre de filtration et une chambre de compression. L'introduction dans la chambre de compression d'un fluide auquel la membrane est imperméable, permet sous l'effet de la pression exercée par ce fluide, une compression du gâteau filtrant et l'expulsion du moût qui l'imprègne. Cette technologie de filtre à membrane a été développée dans les années 80 en alternative aux filtres-presse dit « classiques », principalement pour permettre l'amélioration des performances de lavages des gâteaux de filtration, et en second plan l'amélioration de la déshydratation du gâteau de filtration résiduel pour une meilleure valorisation des drêches qui en résultent.

Il existe également des filtres-presse tubulaires, tel que décrit dans US 3,540,586. Ceux-ci peuvent aussi comporter une étape de compression du gâteau par une membrane flexible pressée contre le gâteau. La pression s'effectue par injection d'un fluide de compression, qui peut par exemple être un fluide liquide ou gazeux. La fig. 14 montre le système de circulation du fluide de compression en circuit fermé. Le système nécessite un réservoir de stockage du fluide de compression.

On connait également par WO 2005/007266, des filtres-presse à plateaux et à membranes flexibles, utilisés notamment pour la filtration de plasma sanguin. La compression du gâteau de filtration est réalisée de préférence à l'aide d'un fluide gazeux. Après l'étape de compression, un lavage du gâteau est réalisé à l'aide d'un liquide de lavage.

En pratique, dans le cas de la filtration de maische de brasserie ou de distillerie, la déformation des membranes flexibles s'effectue communément par gonflement de la chambre de compression avec de l'air injecté à faible pression. Après cette étape de compression, une étape de lavage du gâteau filtrant est réalisée par introduction d'un fluide, de préférence de l'eau chaude, dans la chambre de filtration, afin d'en récupérer l'extrait résiduel.

Quel que soit le fluide de compression (gazeux ou liquide), les procédés appliqués et décrits dans la littérature considèrent toujours séparément les fluides de compression et de lavage : en fin de filtration, le fluide de compression est introduit dans la chambre de compression, puis, en début d'étape suivante, ce fluide est éliminé ou récupéré dans un circuit fermé, par le retour de la membrane à sa position de repos, par la pression du fluide de lavage amené de l'autre côté de la membrane.

Il a été découvert que l'opération transitoire entre la phase de compression et la phase de lavage est critique. Il faut éviter l'effondrement du gâteau de filtration avant d'avoir pu réaliser son lavage. Il faut donc compenser et équilibrer un flux d'élimination du fluide de compression de la chambre de compression par un flux d'arrivée du fluide de lavage dans la chambre de filtration.

De plus, la membrane flexible ayant été pressée contre le gâteau doit être décollée de manière délicate et progressive afin d'éviter d'altérer le gâteau.

Il a également été découvert que l'utilisation de l'air comme fluide de compression présente aussi l'inconvénient de produire une déformation non linéaire du gâteau filtrant sur toute sa hauteur, cette déformation étant plus importante dans la partie supérieure de la chambre de filtration en raison de la différence de densité des fluides de part et d'autre de la membrane ( air / moût ).

La présente invention a pour but de pallier à ces inconvénients et d'améliorer encore les performances de lavage des gâteaux de filtration.

La présente invention consiste à pallier l'inconvénient cité, à ce moment précis de début de lavage / décompression des membranes, en récupérant et utilisant le fluide de compression comme partie du fluide de lavage.

En pratique, le contrôle des flux du fluide de lavage devant entrer dans la chambre de compression et du fluide de compression devant quitter cette chambre de compression, est particulièrement difficile. D'une part, un retrait trop lent de la membrane flexible alors que l'eau de lavage est amenée dans les chambres peut ne pas laisser un volume suffisant entre la surface du gâteau et la membrane et provoquer un effet de laminage du gâteau, formant des passages préférentiels ou canaux. D'autre part, un retrait trop rapide de la membrane peut entraîner un déséquilibre des pressions et l'effondrement partiel ou entier du gâteau, par suite d'un retard d'alimentation en fluide de lavage. Dans les deux situations décrites, la formation des passages préférentiels dans les gâteaux filtrants entraîne un lavage non efficace.

La présente invention a pour objet un procédé de filtration à l'aide d'un filtre-presse à membrane comportant les étapes suivantes .
a) alimentation progressive d'au moins une chambre de filtration par une composition à filtrer,
b) filtration progressive au travers d'un milieu filtrant ; formation d'un gâteau de filtration et récolte du filtrat dans une chambre de récolte ;
c) compression du gâteau de filtration à l'aide d'une membrane flexible pressée contre le gâteau, par un fluide de compression;
d) lavage du gâteau de filtration par un fluide de lavage ;
   le procédé étant **caractérisé en ce que**, après l'étape de compression, le fluide de compression ayant servi à l'étape (c) est utilisé pour le lavage du gâteau de filtration.

D'autres étapes pourraient être ajoutées sans sortir du cadre de l'invention.

Il est à noter que certaines de ces étapes peuvent être concomitantes, par exemple la filtration (étape b) commence alors que l'alimentation de l'étape (a) n'est pas terminée.

Selon la présente invention, au fur et à mesure de la décompression des membranes, le fluide de compression est directement réintroduit dans la chambre de filtration en tant que premier flux de début de lavage. De la sorte, chaque unité de volume qui sort de la chambre de compression est remplacé par une unité de volume de l'autre côté de la membrane dans la chambre de filtration, l'équilibre est ainsi assurément maintenu durant cette phase transitoire délicate.

Selon la présente invention, le fluide de lavage est introduit, de préférence, à une pression égale ou légèrement supérieure à la compression exercée par la membrane, de sorte que la membrane se retire progressivement de sa position de travail jusqu'à sa position de repos en évitant l'effondrement du gâteau.

Le fluide de compression a de préférence une densité égale ou similaire à celle de la composition à filtrer présent dans la chambre de filtration, pour permettre une déformation uniforme de la membrane sur toute sa hauteur, par équilibre des pressions statiques de part et d'autre de la membrane.

Considérant qu'un moût de brasserie a une densité variant de 1,04 à 1,1, le fluide de compression est préférentiellement de l'eau à la température du procédé de filtration, en l'occurrence environ 80°C pour de la maische de brasserie. Des filtrations à plus hautes températures peuvent être envisagées, jusqu'à 99°C par exemple ; dans ce cas la température des fluides de lavage et de compression est adaptée à cette température du procédé.

Le fluide de compression est avantageusement de l'eau chaude qui peut être acidifiée en ligne ;

Dans les salles de brassage, il existe généralement un réservoir à eau chaude, prévu pour l'ensemble des utilisations d'eaux chaudes de la salle de brassage, celui-ci est généralement appelé « bâche à eau chaude » ; le fluide de compression est avantageusement soutiré de cette bâche à eau chaude.

Grâce à la présente invention, le fluide de compression est renouvelé à chaque cycle de filtration. La présente invention ne nécessite donc pas de cuve ni pour une préparation spécifique, ni pour le stockage du fluide de compression.

La présente invention a également pour objet un filtre-presse de type « à pression à membrane » pour la filtration d'une composition à filtrer, le filtre-presse comportant
- au moins une chambre de filtration,
- au moins une chambre de compression;
- au moins une chambre de récolte du filtrat ;
   chaque chambre de filtration étant délimitée par un milieu filtrant et une membrane flexible; chaque chambre de compression étant délimitée d'au moins un côté, par ladite membrane flexible; chaque chambre de récolte du filtrat étant délimitée par le milieu filtrant et un plateau rigide. Lors de la filtration, un gâteau de filtration se forme sur le milieu filtrant.
   Le filtre-presse selon l'invention comporte également
- au moins un conduit d'alimentation de la chambre de filtration;
- au moins un conduit d'alimentation de la chambre de compression;
- au moins un conduit de récolte du filtrat ;

L'invention est **caractérisée en ce que** le fluide de compression est apte à sortir de la chambre de compression et à alimenter la chambre de filtration en vue d'effectuer un lavage du gâteau de filtration.

De manière avantageuse, l'objet de l'invention est décrit dans les sous-revendications.

Dans un filtre-presse traditionnel, la chambre de compression est en générale délimitée, du côté opposé à celui de la membrane flexible, par une paroi rigide. Toutefois, l'invention peut s'appliquer à des filtres-presse où les éléments structurels seraient disposés différemment.

Le filtre-presse suivant l'invention comporte avantageusement des moyens pour alimenter et/ou vider la chambre de compression, tel que par exemple une pompe volumétrique.

En particulier, le conduit d'alimentation de la chambre de filtration peut être alimenté successivement par la composition à filtrer (lors de l'étape de remplissage de la chambre de filtration) ; par le fluide de compression sortant de la chambre de compression (en début d'étape de lavage) puis par une alimentation supplémentaire en eau de lavage (étape de lavage proprement dite).

L'eau de compression représente environ entre 10 et 20 % du fluide total de lavage.

L'élimination complète du fluide de compression hors de la chambre de compression, via le moyen pour vider (pompe volumétrique), peut avantageusement être contrôlée par une mesure de pression à proximité ou dans la chambre de compression.

L'avantage technique principal du procédé et du filtre-presse selon l'invention est le maintien de l'équilibre des pressions en phase transitoire « fin de compression / début de lavage ».

D'autres avantages de ce procédé sont liés à la gestion de cette eau de compression.

A titre d'exemple, un filtre industriel de 65 chambres utilise environ 40 hectolitres d'eau de compression pour cette étape de compression, et 65 hectolitres pour la compression finale en fin de cycle.

Ces quantités non négligeables de fluides doivent inévitablement être récupérées et stockées et on n'imagine pas leur mise à l'égout systématique. Pour un procédé utilisant de l'eau comme fluide de compression mais sans l'objet de la présente invention, ces quantités d'eau non négligeables doivent forcément être récupérées dans un réservoir, où l'eau va se refroidir puis devoir être réchauffée à la température du procédé afin d'éviter les chocs de température au niveau des membranes dans les chambres de compression. Ce système de réservoir avec une eau « stagnante » en boucle fermée, qui subit des refroidissements/réchauffements successifs, présente d'importants risques de contaminations de cette eau de compression et peut s'avérer dangereux pour les applications agro-alimentaires. En effet, en cas de fuite ou de percement d'une membrane flexible, il y a contact direct entre le fluide de compression qui pourrait être fortement contaminé et le produit à filtrer.

Par contre, le procédé selon l'invention ne nécessite pas de réservoir spécial ni de circuit de boucle avec échangeur pour la gestion du fluide de compression. Le fluide de compression peut être de l'eau chaude, celle-ci est renouvelée à chaque étape de compression, et ne risque pas elle-même d'être contaminée comme c'est le cas quand l'eau de compression est récupérée dans un circuit fermé. Le fluide de compression est identique à l'eau utilisée pour le lavage (température, pH). Le système est simple, efficace et ne présente pas de risque lié à une contamination, ni pour le produit à filtrer, ni pour les membranes.

La présente invention va maintenant être décrite, à titre d'exemple, par référence aux dessins annexés, dans lesquelles :
- la fig. 1 représente une vue en coupe d'une double chambre de filtration d'un filtre-presse selon l'invention ;
- les fig. 2 à 10 représentent des vues similaires d'un filtre-presse comportant 6 chambres de filtration ; chaque fig. représentant une étape différente du procédé ;

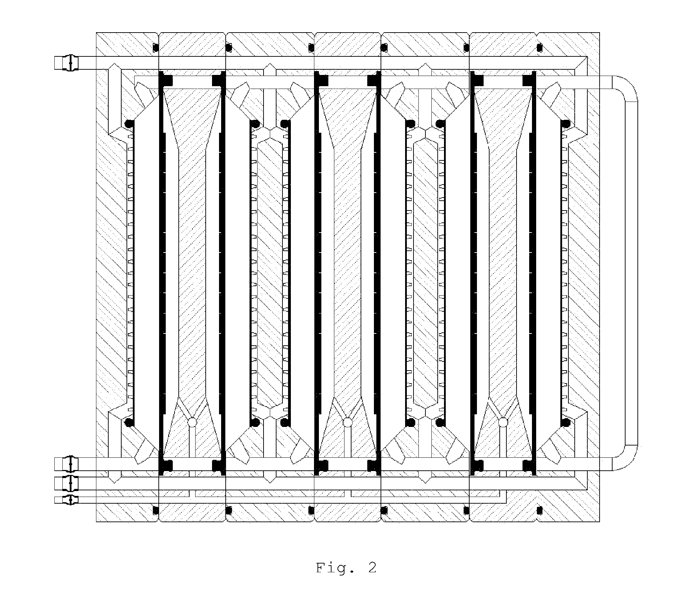

- dans la fig. 2, le filtre-presse selon l'invention est vide ;

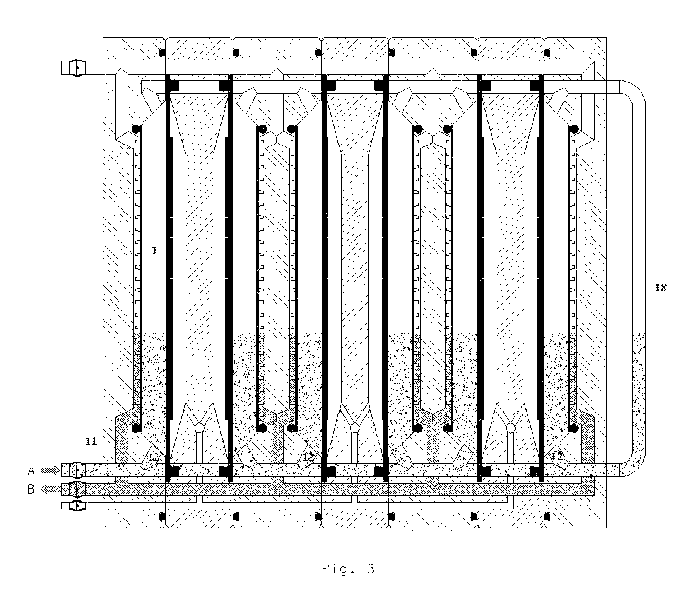

- la fig. 3 illustre l'étape de remplissage ;

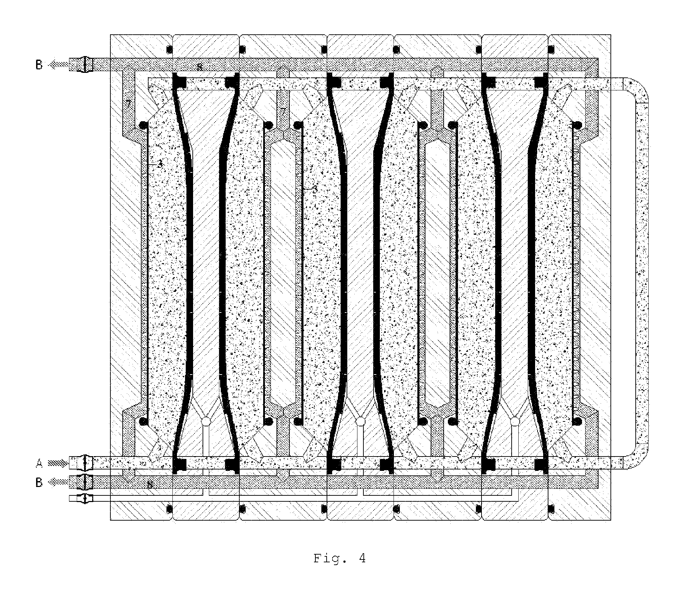

- la fig. 4 illustre l'étape de filtration ;

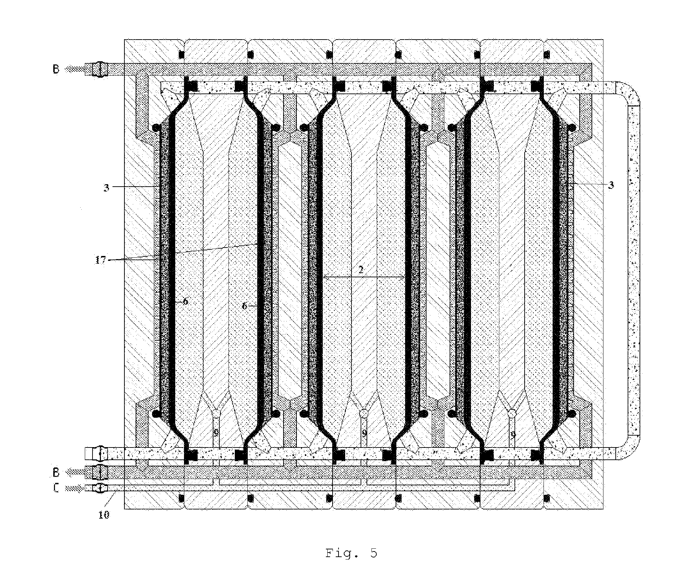

- la fig. 5 illustre l'étape de compression ;

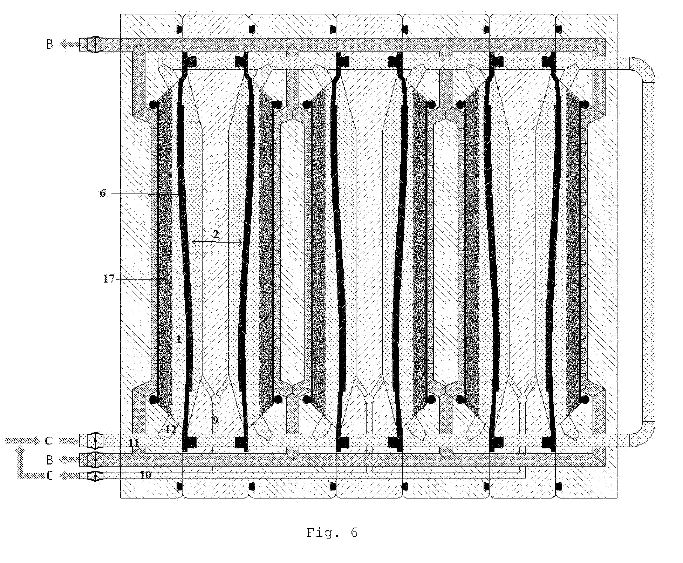

- la fig. 6 illustre l'étape de début de lavage ;

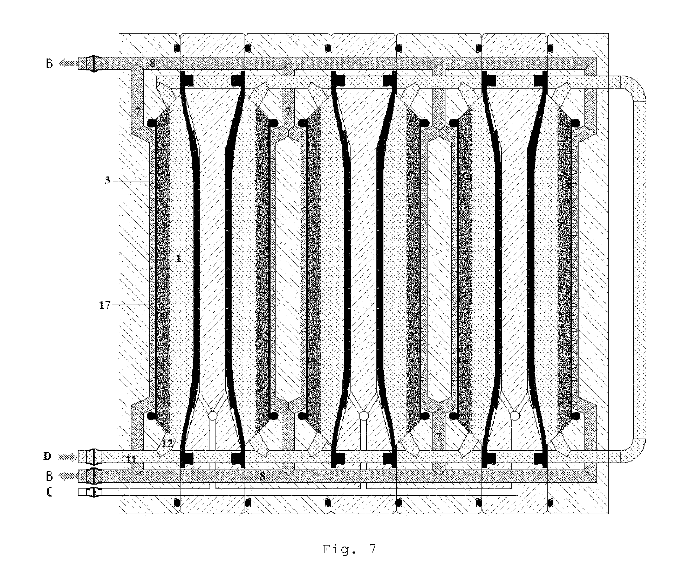

- la fig. 7 illustre l'étape de lavage ;

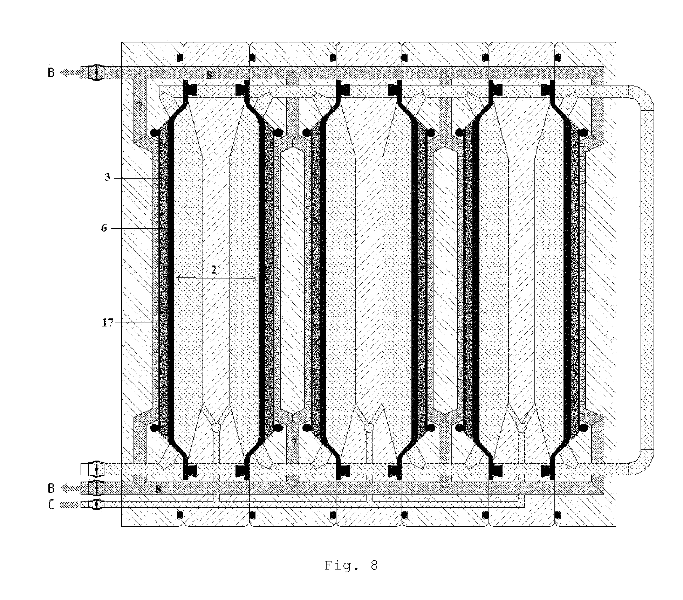

- la fig. 8 illustre l'étape de compression finale ;

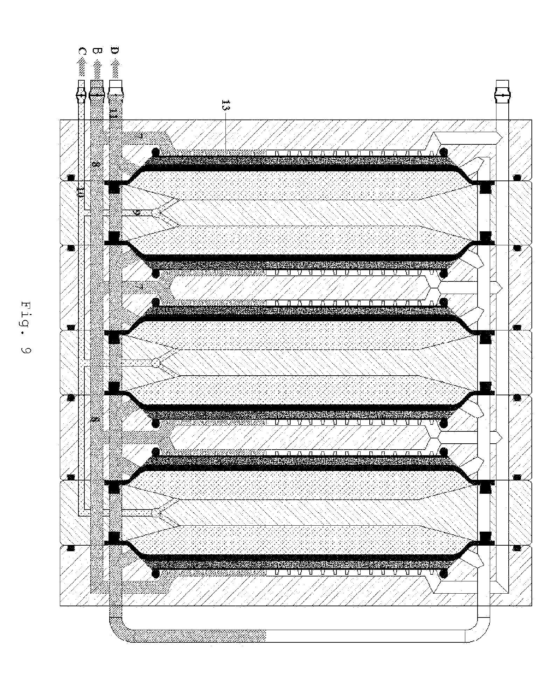

- la fig. 9 illustre l'étape de drainage et de décompression du filtre ;

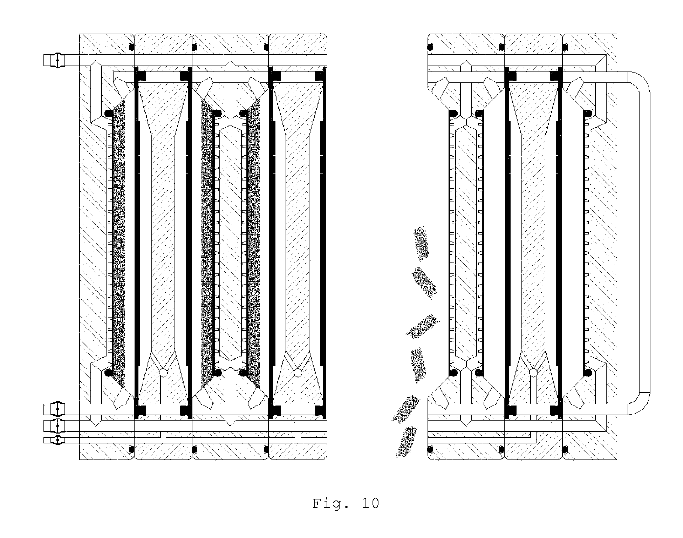

- la fig. 10 illustre l'étape de débâtissage.

### Exemple

A titre d'exemple, nullement limitatif, un filtre-presse à couche mince à membranes utilisé pour la filtration de maische de brasserie ou distillerie est décrit ci-dessous.

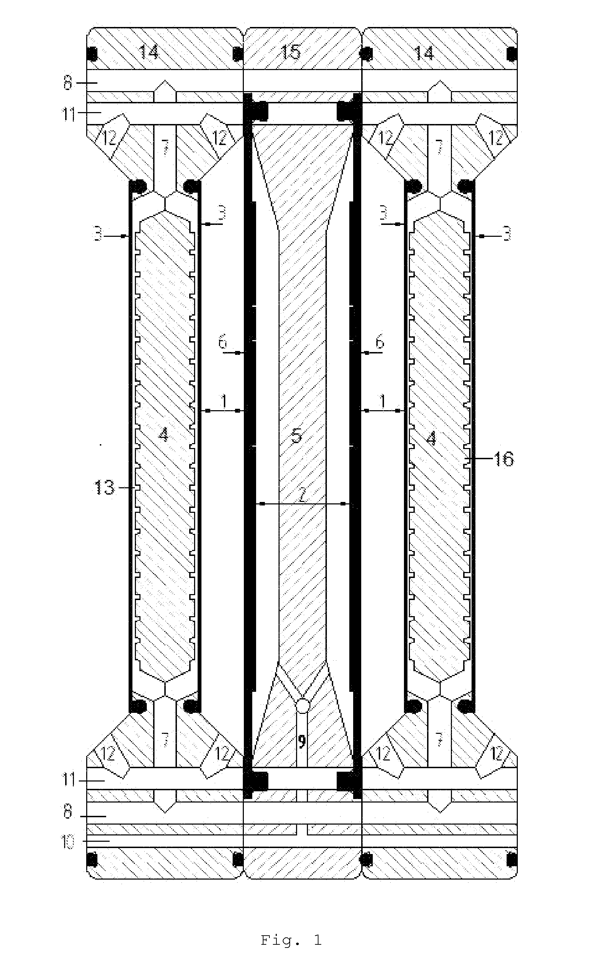

La figure 1 est une vue en coupe d'une double chambre de filtration, elle se compose de deux chambres de filtration 1, et d'une chambre de compression 2.

Chaque chambre de filtration 1 est délimitée frontalement d'une part par une toile filtrante 3, de préférence des toiles en polypropylène monofilaments et calandrées sur une face, et d'autre part par une membrane 6 en matériau élastomère.

Chaque toile filtrante 3 est supportée par un plateau 4 en polypropylène. Une chambre de récolte 13 est donc comprise entre la toile filtrante et le plateau 4. Des canaux 7 hauts et bas de collecte de filtrat sont ménagés dans le plateau 4. Ces canaux 7 débouchent dans les canaux communs principaux 8 haut et bas de collecte de filtrat. Dans ce mode de réalisation particulier, le plateau 4 comporte une surface irrégulière munie de petits plots 16 de manière à faciliter l'écoulement du filtrat vers les canaux 7.

Chaque membrane élastique 6 est supportée par un cadre-support 5. Un canal 9 pour l'alimentation en fluide de compression est ménagé de part et d'autre du cadre-support 5. Les canaux 9 de chaque cadre support 5 sont reliés à un canal commun principal 10 d'alimentation en fluide de compression.

Dans une forme avantageuse du procédé, le fluide de compression est de l'eau chaude à la température de filtration du procédé, soit environ 80°C pour une maische de brasserie, et les canaux d'alimentation sont placés en partie inférieure des éléments afin de permettre un remplissage optimum des chambres de compression.

Un canal principal d'alimentation 11 permet l'introduction de la maische à filtrer dans les chambres 1 via les canaux 12.

Un filtre-presse complet comporte une succession de double chambre comme illustrée à la fig. 1, résultant de l'assemblage des cadres périphériques 14 des plateaux 4 avec les cadres périphériques 15 des cadres-support 5. Les fig.2 à 10 illustrent schématiquement un filtre-presse complet qui comporterait 6 chambres de filtrations. Dans la pratique, les filtres-presse peuvent évidemment comporter bien plus de chambres de filtration.

### Remplissage et Filtration

Comme on le voit à la fig. 3, la maische à filtrer (A) est introduite sous pression dans le filtre-presse, par le canal principal 11 inférieur et remplit les chambres de filtration 1 via les canaux 12 inférieurs. Une fois les chambres de filtration 1 remplies de maische (fig. 4), pour les filtres équipés d'une boucle de recirculation 18, l'introduction de la maische dans les chambres de filtration 1 peut s'effectuer par les entrées basses et/ou hautes, de manière simultanée ou en alternance.

La pression de filtration s'établit progressivement, résultant de la formation du gâteau 17 sur les toiles filtrantes 3, de l'ordre de 0,3 à 0,8 bars, tandis que le filtrat (B) s'écoule au travers de celles-ci dans la chambre de récolte puis par les canaux de collecte 7 puis débouche dans les canaux collecteurs principaux haut et bas 8.

Les gâteaux de filtration 17 (illustré à partir de la fig. 5), constitués des matières insolubles de la maische (drêches), et du moût d'imprégnation, sont donc délimités entre les supports filtrants 3 et les membranes flexibles 6.

### Compression

En fin de filtration, les alimentations en maische, non-représentées, sont fermées. Le fluide de compression (C), qui dans la présente invention a été défini comme étant de l'eau chaude en provenance de la bâche à eau chaude de la salle de brassage, est amené par le conduit 10 via une pompe (non représentée) et alimente les chambres de compression 2 via les canaux 9.

Sous l'effet de l'introduction de cette eau dans la chambre de compression et de la pression qui en résulte, de l'ordre de 0,3 à 0,6 bars, les membranes élastomères 6 se déforment et se bombent de manière uniforme sur toute leur hauteur en direction des gâteaux de filtration 17. L'introduction d'eau dans la chambre de compression crée un mouvement des membranes 6 vers le gâteau de filtration 17, un gonflement de la chambre de compression 2 et une réduction de la chambre de filtration 1. Cette réduction de volume des chambres de filtration 1 a un effet de compression uniforme du gâteau de filtration 17.

Les avantages de cette étape sont, d'une part la récupération du moût d'imprégnation (B) au travers des toiles filtrantes 3, et d'autre part une homogénéisation des gâteaux filtrants 17 ainsi qu'une diminution de leur porosité qui va permettre une meilleure efficacité du lavage ultérieur en évitant de former des canaux préférentiels.

La durée de cette première étape de compression est déterminée par le volume ou débit du moût récupéré.

### Lavage

Comme illustré à la fig. 6, en fin de compression et selon l'objet de l'invention, l'eau de compression (C) est progressivement retirée des chambres de compression 2 via les canaux 9 puis 10, à l'aide d'une pompe volumétrique par exemple, pour être réinjectée, en tant que fluide de lavage, par les canaux 11 puis 12 dans les chambres de filtration 1. De cette manière, l'équilibre des pressions est garanti de part et d'autre des membranes élastiques 6, chaque litre d'eau sortant des chambres de compression 2 étant assurément remplacé par le volume équivalent d'eau entrant dans les chambres de filtration 1 pour le lavage du gâteau 17. L'élimination complète du fluide de compression (C) hors des chambres de compression 2 est assurée et contrôlée par une mesure de pression à proximité ou dans la chambre de compression 2.

Une fois toute l'eau des chambres de compression 2 évacuée et utilisée en tant que flux de lavage initial, l'opération de lavage proprement dite se poursuit avec de l'eau supplémentaire, en provenance directe de la bâche à eau chaude.

Comme illustré à la fig. 7, l'eau supplémentaire (D) de lavage des gâteaux filtrants est amenée dans les chambres de filtration 1, par le même chemin que celui d'alimentation de la maische (A), à savoir via les canaux principaux 11 et les canaux individuels 12.

L'introduction de l'eau de lavage peut s'effectuer en alternance ou de manière simultanée par les canaux hauts et/ou bas, à une pression égale ou légèrement supérieure à la pression exercée par les membranes sur les gâteaux 17. L'eau de lavage s'écoule à travers les gâteaux filtrants 17 puis à travers les toiles filtrantes 3, et tout comme le filtrat (B), débouche dans le canal principal collecteur 8 via les petits canaux 7. Le lavage se poursuit jusqu'à utilisation d'un volume d'eau de lavage (C+D) qui correspond à la récupération maximale des sucres résiduels des gâteaux filtrants.

### Compression finale

En fin d'étape de lavage, les alimentations en eau de lavage sont fermées, les chambres de compressions 2 sont de nouveau alimentées en fluide de compression (C), comme illustré à la fig. 8. De nouveau, les membranes élastiques 6 se déforment et se déplacent à nouveau, en direction du gâteau de filtration 17, en réduisant le volume de la chambre de filtration 1; elles provoquent ainsi une dernière compression du gâteau filtrant 17 et une évacuation finale de l'eau d'imprégnation des chambres de filtration 1 via les toiles filtrantes 3 et les canaux de collecte de filtrat 7 et 8. La durée de cette opération est déterminée par le volume d'eau d'imprégnation à extraire pour l'obtention d'un certain degré de déshydratation du gâteau filtrant (drêches).

Pour cette dernière étape de compression finale, le fluide de compression (C) peut être soit de l'air, soit à nouveau de l'eau chaude, qui, en fin d'étape, pourra être évacuée des chambres de compression 2 via une pompe et renvoyée vers la bâche à eau chaude de la salle de brassage.

### Drainage et décompression

Comme illustré à la fig. 9, en fin de compression finale, sont éliminés le filtrat (B) restant dans les chambres de récolte 13 et dans les canaux 7 et 8, ainsi que le fluide de lavage résiduel dans le canal principal d'alimentation 11.

Durant cette vidange, les membranes 6 sont toujours gonflées par le fluide de compression (C) et obstruent les canaux d'entrée 12 dans les chambres de filtration 1.

Ensuite, le fluide de compression (C) est éliminé des chambres de compression via les canaux 9 et 10.

### Débâtissage

Finalement, comme illustré à la fig. 10, le gâteau filtrant comprimé (drêches), à un taux de matières sèches compris entre 25 et 40%, est évacué par ouvertures successives des éléments (plateaux 4 et cadres-support 5) du filtre-presse.

## Revendications

1. Procédé de filtration à l'aide d'un filtre-presse à membrane comportant les étapes suivantes :
a) alimentation progressive d'une chambre de filtration (1) par une composition à filtrer (A),
b) filtration progressive au travers d'un milieu filtrant (3) ; formation d'un gâteau de filtration (17) et récolte du filtrat (B) dans une chambre de récolte (13);
c) compression du gâteau de filtration (17) à l'aide d'une membrane flexible (6) pressée par un fluide de compression;
d) lavage du gâteau de filtration (17) par un fluide de lavage;
le procédé étant **caractérisé en ce que**, après l'étape de compression, ledit fluide de compression ayant servi à l'étape c) est utilisé pour le lavage du gâteau de filtration (17) à l'étape d).

2. Procédé suivant la revendication précédente, **caractérisé en ce que** le fluide de compression et de lavage (C) a une densité égale ou similaire à celle de la composition à filtrer (A).

3. Procédé suivant l'une quelconque des revendications précédentes, **caractérisé en ce que** le fluide de compression et de lavage (C) est de l'eau.

4. Procédé suivant l'une quelconque des revendications précédentes, **caractérisé en ce que** le fluide de compression et de lavage (C) est à une température proche de celle du procédé de filtration, en particulier une température comprise entre 70 et 99 °C, de préférence entre 72 et 90°C et de manière encore préférée entre 75 et 85°C.

5. Procédé suivant l'une quelconque des revendications précédentes, **caractérisé en ce que** le lavage du gâteau (17) est, en plus, assuré par une alimentation extérieure (D) en fluide de lavage.

6. Procédé suivant la revendication précédente, **caractérisé en ce que** le l'alimentation extérieure (D) en fluide de lavage est effectuée, au moins en partie, simultanément au lavage du gâteau par le fluide de compression (C).

7. Procédé suivant l'une quelconque des revendications précédentes, **caractérisé en ce que** la composition à filtrer (A) est une maische de brasserie ou de distillerie.

8. Procédé suivant l'une quelconque des revendications précédentes, **caractérisé en ce que** les étapes (a) à (c) sont répétées en boucle, puis un lavage (étape d) et une compression finale sont réalisés, et finalement un débâtissage par élimination du gâteau comprimé (17).

9. Procédé suivant l'une quelconque des revendications 1 à 7, **caractérisé en ce que** les étapes (c) à (d) sont répétées en boucle après les étapes (a) et (b), puis une compression finale est réalisée, puis un débâtissage par élimination du gâteau comprimé (17).

10. Filtre-presse de type « à pression à membrane » pour la filtration d'une composition à filtrer (A), comportant
i) au moins une chambre de filtration (1) ;
ii) au moins une chambre de compression (2) ;
la chambre de filtration (1) étant délimitée par une membrane flexible (6) et par un milieu filtrant (3) sur lequel un gâteau de filtration 17 est apte à se former;
la chambre de compression (2) étant délimitée d'au moins un côté, par la membrane flexible (6);
iii) au moins une chambre (13) de récolte du filtrat délimitée par le milieu filtrant (3) et un plateau rigide (4);
iv) au moins un conduit (8, 12) d'alimentation de la chambre de filtration (1);
v) au moins un conduit (9, 10) d'alimentation de la chambre de compression (2);
vi) au moins un conduit (7, 8) de récolte du filtrat (B); **caractérisé en ce que** le filtre-presse est conçu de manière à permettre au fluide de compression de sortir de la chambre de compression (2) et d'alimenter la chambre de filtration (1) en vue d'effectuer un lavage du gâteau (17).

11. Filtre-presse suivant la revendication précédente, **caractérisé en ce qu'**il comporte des moyens pour alimenter et vider la chambre de compression (2).

12. Filtre-presse suivant l'une quelconque des revendications 10 et 11, **caractérisé en ce que** le conduit (8, 12) d'alimentation de la chambre de filtration (1) peut être alimenté successivement par la composition à filtrer (A) et par le fluide de compression (C) sortant de la chambre de compression (2).

13. Filtre-presse suivant la revendication précédente, **caractérisé en ce que** le conduit (8, 12) d'alimentation de la chambre de filtration (1) peut être alimenté par une arrivée en fluide de lavage extérieure (D) ne provenant pas de la chambre de compression (2).

14. Filtre presse suivant l'une quelconque des revendications 11 à 13, **caractérisé en ce que** les moyens pour alimenter et vider la chambre de compression comportent une pompe volumétrique.
